# FASCICULE DE BREVET EUROPEEN

(11) **EP 4 487 025 B1**
(45) Date de publication et mention de la délivrance du brevet: **24.12.2025**
(21) Numéro de dépôt: 23706577.6
(22) Date de dépôt: 20.02.2023
(51) Int. Cl.: F16D 13/58, F16D 13/75

(54) **MECANISME D'EMBRAYAGE NOTAMMENT POUR VEHICULE MOTORISE**
KUPPLUNGSMECHANISMUS, INSBESONDERE FÜR EIN KRAFTFAHRZEUG
CLUTCH MECHANISM, IN PARTICULAR FOR A MOTORIZED VEHICLE

(30) Priorité: 28.02.2022 FR 2201760
(43) Date de publication de la demande: 08.01.2025
(73) Titulaire: VALEO EMBRAYAGES, 80009 Amiens (FR)
(72) Inventeur: PERRY, Benoit, 95892 CERGY PONTOISE (FR); DUBOIS, Bernard, 95892 CERGY PONTOISE (FR)
(74) Mandataire: Valeo Powertrain Systems
(86) Numéro de dépôt international: PCT/EP2023/054160
(87) Numéro de publication internationale: WO 2023/161176

(56) Documents cités:
- WO-A1-2007/085766
- DE-A1- 102016 202 300
- FR-A1- 2 456 878
- FR-A1- 2 548 301

## Description

La présente invention se rapporte à un mécanisme d'embrayage notamment pour véhicule motorisé, par exemple un véhicule automobile, un motocycle ou tout autre véhicule comprenant au moins un moteur thermique. Le véhicule automobile peut être un véhicule dit industriel, ce dernier étant par exemple un poids lourd, un véhicule de transport en commun, ou un véhicule agricole.

Plus précisément, l'invention concerne un perfectionnement au mécanisme d'embrayage comprenant typiquement un couvercle, un plateau de pression, un ressort à diaphragme monté, éventuellement précontraint, entre le couvercle et le plateau de pression, et des moyens d'articulation de ce ressort à diaphragme par rapport au couvercle.

Dans un tel mécanisme d'embrayage, en position embrayée, le ressort à diaphragme exerce sur le plateau de pression des efforts suffisants pour pincer un disque d'embrayage entre le plateau de pression et un volant d'inertie, par exemple un double volant amortisseur, et permettre ainsi la transmission du couple moteur vers la boite de vitesses. Dans le cas d'un mécanisme d'embrayage de type poussé, le débrayage est réalisé par appui d'une butée d'embrayage sur la partie centrale du diaphragme selon l'axe de rotation. Ce ressort à diaphragme coopère alors avec les moyens d'articulation, ménagés entre le ressort à diaphragme et le couvercle, de sorte que la partie radialement extérieure du diaphragme puisse s'écarter du plateau de pression. Dans ces conditions, le plateau de pression s'éloigne du disque d'embrayage sous l'effet de moyens de rappel élastiques, libérant ainsi le disque, ce qui permet de cesser de transmettre le couple du moteur a la boite de vitesses et, le cas échéant, d'effectuer les changements de rapports de vitesses nécessaires.

A la suite d'un grand nombre de débrayages, on constate que l'articulation du ressort à diaphragme par rapport au couvercle a tendance à s'user (on parle d'usure et/ou de matage) sous l'effet des mouvements répétés, et qu'il apparait un jeu de fonctionnement entre cette articulation et le ressort à diaphragme. Ces phénomènes de matage et/ou d'usure sont particulièrement observés dans les mécanisme d'embrayage utilisés dans les véhicules du type véhicules industriels ou poids lourds lorsque les efforts exercés par le ressort à diaphragme sur l'articulation peuvent atteindre 10 000 N. L'apparition d'un tel jeu de fonctionnement a pour effet de réduire la course de la périphérie du diaphragme lorsque celui-ci est poussé par la butée d'embrayage, et ainsi de réduire le déplacement axial du plateau de pression lors du passage de la position embrayée à la position débrayée. Dans un mode dégradé, il n'est plus possible de réaliser un débrayage complet. Une partie du couple du moteur continue ainsi d'être transmise à ce disque, ce qui rend difficile, voire impossible, les changements de rapport de la boite de vitesses. Il existe un besoin de proposer un mécanisme d'embrayage dont le déplacement axial du plateau de pression ne varie pas au cours de la durée de vie du véhicule.

On connait le document FR 2 886 997 qui décrit un mécanisme d'embrayage comprenant des moyens de compensation du jeu de fonctionnement entre l'articulation et le ressort à diaphragme. Ces moyens de compensation du jeu comprennent une couronne fixe par rapport au couvercle, une contre-couronne montée libre entre ladite couronne et ledit diaphragme, lesdites couronne et contre-couronne étant munies respectivement de rampes et contre-rampes. Des moyens de rappel élastique tendent à faire pivoter ladite contre- couronne par rapport à ladite couronne dès qu'une usure apparait au sein de l'articulation. De cette manière, la contre-couronne demeure en appui contre le diaphragme quelle que soit l'usure infligée par ce diaphragme à cette contre- couronne et permet de réaliser un débrayage complet du mécanisme d'embrayage. Ce mécanisme d'embrayage présente cependant une architecture complexe et utilise un grand nombre de composants devant être mis en mouvement autour de l'axe de rotation pour éviter l'apparition d'un jeu de fonctionnement entre l'articulation et le ressort à diaphragme. D'autres exemples de mécanismes d'embrayage sont décrits dans les documents WO 2007/085766 A1, DE 10 2016 202300 A1, FR 2 456 878 A1 et FR 2 548 301 A1.

L'invention vise à remédier à ces problèmes techniques en proposant un mécanisme d'embrayage perfectionné capable de compenser l'usure de l'articulation du ressort à diaphragme de manière à réaliser un débrayage complet du mécanisme d'embrayage tout en présentant une architecture simplifiée par rapport aux mécanisme d'embrayages connus de l'état de la technique.

L'invention a également pour but d'apporter une solution simple, efficace et économique à ces problèmes.

A cet effet, la présente invention propose un mécanisme d'embrayage, pour véhicule motorisé, comprenant un couvercle, un plateau de pression solidaire en rotation du couvercle et mobile axialement par rapport à celui-ci, un ressort à diaphragme en appui sur le couvercle et le plateau de pression,
le ressort à diaphragme étant maintenu en précontrainte axiale à l'encontre du couvercle par l'intermédiaire d'une rondelle de support dotée d'excroissances axiales traversant le ressort à diaphragme et le couvercle, chaque excroissance axiale disposant d'une butée axiale apte à transmettre l'effort de précontrainte axiale au couvercle, et d'une pluralité de segments élastiques, répartis angulairement autour de l'axe de rotation X du mécanisme d'embrayage, disposés entre deux composants adjacents du mécanisme d'embrayage, à savoir entre la butée axiale des excroissances axiales et le couvercle ou entre la rondelle de support et le ressort à diaphragme, lesquels segments élastiques exercent la précontrainte axiale sur le ressort à diaphragme.

Le mécanisme d'embrayage selon l'invention est remarquable en ce que chaque segment élastique exerce une première force d'action selon un premier diamètre d'application de force et une deuxième force d'action selon un deuxième diamètre d'application de force sur un des composants adjacents du mécanisme d'embrayage, ainsi qu'une force de réaction selon un troisième diamètre d'application de force sur l'autre composant adjacent du mécanisme d'embrayage, les premier, deuxième et troisième diamètres d'application de force étant concentriques et espacés radialement.

Ce mécanisme d'embrayage, selon l'invention, présente l'avantage de compenser l'usure de l'articulation du ressort à diaphragme en raison de l'élasticité des segments selon l'axe de rotation X. De cette manière, il sera toujours possible de réaliser un débrayage complet du mécanisme d'embrayage pendant toute la durée de vie du véhicule motorisé. Grace à la géométrie particulière des segments élastiques, la capacité de compensation d'usure est améliorée en décalant radialement les diamètres d'application de force. Le décalage des diamètres d'application de force a pour effet de réduire la raideur des segments élastiques tout en permettant de supporter les efforts exercés par le ressort à diaphragme sur l'articulation qui peuvent atteindre par exemple 10 000 N. Par exemple, les forces d'action et la force de réaction peuvent être d'orientation axiale.

De préférence, chaque segment élastique peut s'étendre angulairement autour de l'axe X selon un angle compris entre 25° et 170°.

Avantageusement, le nombre de segments élastiques peut être compris entre 2 et 12, les segments élastiques étant régulièrement répartis angulairement autour de l'axe X.

De préférence, au moins une des première et deuxième forces d'action peut être orientée axialement dans une direction opposée à la force de réaction.

Avantageusement, chaque segment élastique peut comprendre des trous de passage pour les excroissances axiales, les trous de passage étant disposés radialement au-delà du premier diamètre d'application de force de la première force d'action. De cette manière, l'architecture de l'articulation au sein du mécanisme d'embrayage est compacte radialement.

De préférence, le couvercle peut supporter le ressort à diaphragme à l'aide d'emboutis formés directement dans le couvercle ou d'un jonc annulaire rapporté dans une gorge du couvercle.

Avantageusement, chaque segment élastique peut comprendre une première surface d'application de la première force d'action, une deuxième surface d'application de la deuxième force d'action, une troisième surface d'application de la force de réaction, la troisième surface d'application étant décalée axialement par rapport aux première et deuxième surfaces d'application.

De préférence, le diamètre d'application de force d'au moins une des première et deuxième forces d'action ou de la force de réaction peut être décalé radialement par rapport au diamètre d'implantation des excroissances axiales.

Selon un mode de réalisation de l'invention, le troisième diamètre d'application de force de la force de réaction peut être disposé radialement au-delà des premier et deuxième diamètres d'application de force. Le décalage du troisième diamètre d'application de force de la force de réaction a pour effet de réduire la raideur des segments élastiques et d'augmenter la capacité de compensation de l'usure de l'articulation du ressort à diaphragme.

Avantageusement, la première force d'action selon un premier diamètre d'application de force et la deuxième force d'action selon un deuxième diamètre d'application de force peuvent être orientées axialement dans des directions opposées.

De préférence, chaque segment élastique, disposé entre la rondelle de support et le ressort à diaphragme, peut comprendre un diamètre d'appui sur le ressort à diaphragme confondu avec le troisième diamètre d'application de force.

Avantageusement, chaque segment élastique peut comprendre des pattes issues d'un bord circonférentiel interne et la rondelle de support peut comprendre des orifices répartis angulairement autour de l'axe X, les pattes des segments élastiques étant insérées dans les orifices.

De préférence, la rondelle de support peut comprendre une face supérieure d'appui orientée en direction du ressort à diaphragme et une face inférieure d'appui axialement opposée à la face supérieure d'appui, chaque segment élastique appuyant simultanément sur la face inférieure d'appui selon la première force d'action et sur la face supérieure d'appui selon la deuxième force d'action.

Avantageusement, les pattes de chaque segment élastique peuvent appuyer sur la face inférieure d'appui de la rondelle de support.

Avantageusement, chaque segment élastique peut appuyer sur une périphérie interne de la rondelle de support par l'intermédiaire de chaque patte qui est formée avec un angle Δ par rapport à la face d'appui inférieure d'appui de la rondelle de support.

De préférence, le deuxième diamètre d'application de force de la deuxième force d'action peut être sensiblement confondu avec le diamètre d'implantation des excroissances axiales issues de la rondelle de support.

Avantageusement, la rondelle de support peut comprendre au moins un plot de centrage associé à chaque segment élastique, chacun des plots de centrage étant inséré dans un trou aménagé dans le segment élastique associé. Le plot de centrage peut être extrudé depuis la partie annulaire de la rondelle de support.

En variante, chaque segment élastique peut comprendre des pattes issues d'un bord circonférentiel interne et la rondelle de support peut comprendre des échancrures formées sur un bord interne et réparties angulairement autour de l'axe X, les pattes des segments élastiques étant insérées dans les échancrures.

Selon un autre mode de réalisation de l'invention, le troisième diamètre d'application de force de la force de réaction peut être disposé radialement entre les premier et deuxième diamètres d'application de force. Le décalage du troisième diamètre d'application de force de la force de réaction a pour effet de réduire la raideur des segments élastiques et d'augmenter la capacité de compensation de l'usure de l'articulation du ressort à diaphragme.

De préférence, les trous de passage pour les excroissances axiales peuvent être disposés radialement entre le premier diamètre d'application de force et le deuxième diamètre d'application de force.

Avantageusement, la première force d'action selon un premier diamètre d'application de force et la deuxième force d'action selon un deuxième diamètre d'application de force peuvent être orientées axialement dans la même direction.

De préférence, la rondelle de support peut comprendre une face supérieure d'appui orientée en direction du ressort à diaphragme, chaque segment élastique appuyant simultanément sur la face supérieure d'appui avec les première et deuxième forces d'action.

Avantageusement, chaque segment élastique, disposé entre la butée axiale des excroissances axiales et le couvercle, peut comprendre un diamètre d'appui sur les butées axiales confondu avec le troisième diamètre d'application de force.

De préférence, le couvercle peut comprendre une face supérieure d'appui orientée axialement vers l'extérieur du mécanisme d'embrayage, chaque segment élastique appuyant simultanément sur la face supérieure d'appui avec les première et deuxième forces d'action.

Avantageusement, le ressort à diaphragme peut être monté de manière à pouvoir basculer par rapport au couvercle autour de moyens d'articulation. Par exemple, les moyens d'articulation sont réalisés en partie sous forme d'emboutis formés directement dans le couvercle ou en partie sous la forme d'un anneau rapporté sur le couvercle.

L'invention peut présenter l'une ou l'autre des caractéristiques décrites ci-dessous combinées entre elles ou prises indépendamment les unes des autres :
- chaque segment élastique peut être fixé solidement sur la rondelle de support ou sur le couvercle à l'aide d'au moins un point de fixation, par exemple par rivetage, soudage ou vissage ;
- les points de fixation des segments élastiques peuvent être répartis angulairement selon le premier diamètre d'application de force ;
- les points de fixation peuvent être des rivets ;
- les points de fixation peuvent être des points de soudure ;
- les excroissances axiales peuvent être rapportées sur la rondelle de support ;
- les excroissances axiales peuvent être des entretoises serties sur la rondelle de support ;
- le deuxième diamètre d'application de force de la deuxième force d'action peut être sensiblement confondu avec le diamètre d'implantation des entretoises serties sur la rondelle de support ;
- la rondelle de support peut être en appui direct sur le ressort à diaphragme ;
- la rondelle de support peut être en appui indirect sur le ressort à diaphragme notamment par l'intermédiaire des segments élastiques intercalés axialement entre les deux composants adjacents ;
- les excroissances axiales peuvent être issues de matière avec la rondelle de support ;
- les excroissances axiales peuvent être des pattes pliées issues de la périphérie interne de la rondelle de support ;
- les excroissances axiales peuvent passer au travers d'ouvertures aménagées sur un fond du couvercle ;
- les pattes des segments élastiques peuvent être décalées angulairement par rapport aux trous de passage aménagés pour laisser passer les excroissances axiales ;
- les pattes des segments élastiques peuvent être orientées angulairement en face des trous de passage aménagés pour laisser passer les excroissances axiales.

L'invention a également pour objet, selon un autre de ses aspects, un sous-ensemble de transmission pour véhicule motorisé, comprenant :
- un volant d'inertie,
- un mécanisme d'embrayage reprenant tout ou partie des caractéristiques mentionnées précédemment, fixé sur le volant d'inertie, et
- un disque d'embrayage intercalé axialement entre le volant d'inertie et le plateau de pression du mécanisme d'embrayage.

Ce sous-ensemble de transmission, selon cet autre aspect de l'invention, présente l'avantage de pouvoir transmettre des couples élevés depuis le moteur thermique vers la boite de vitesses.

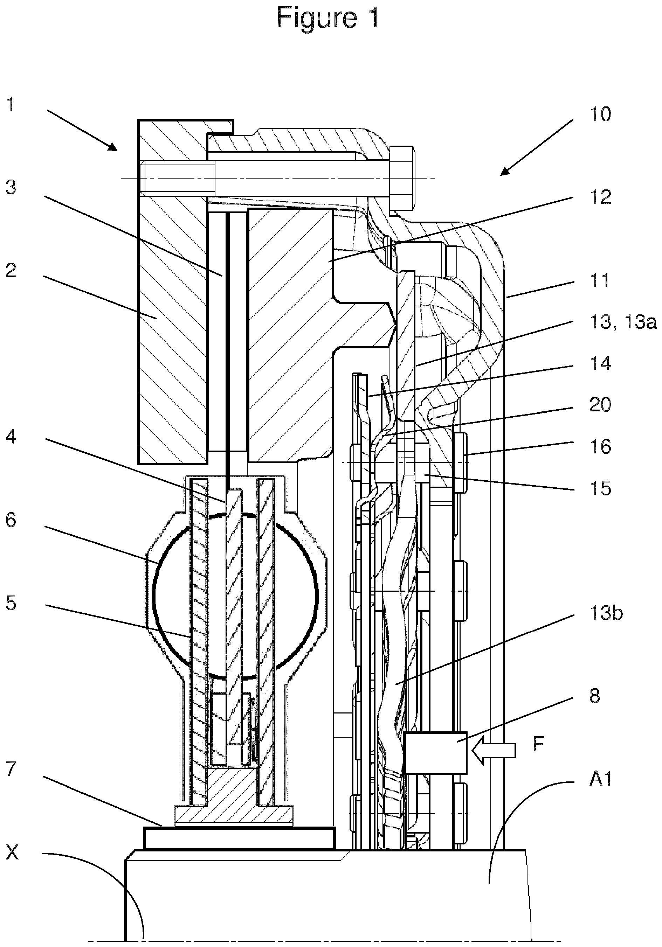

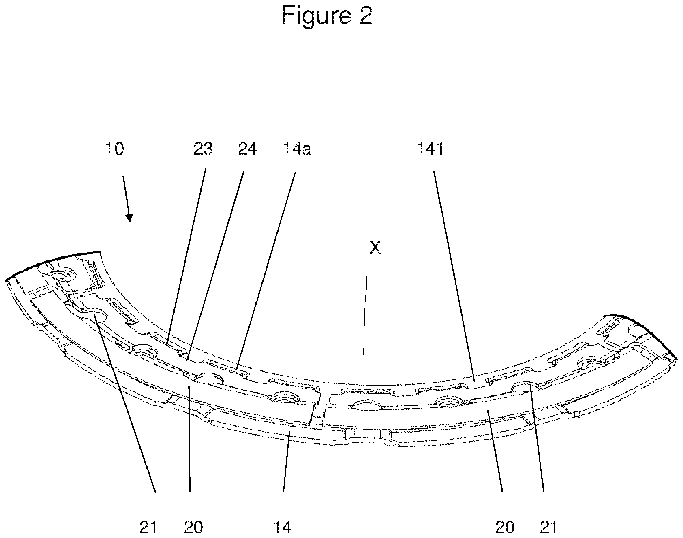

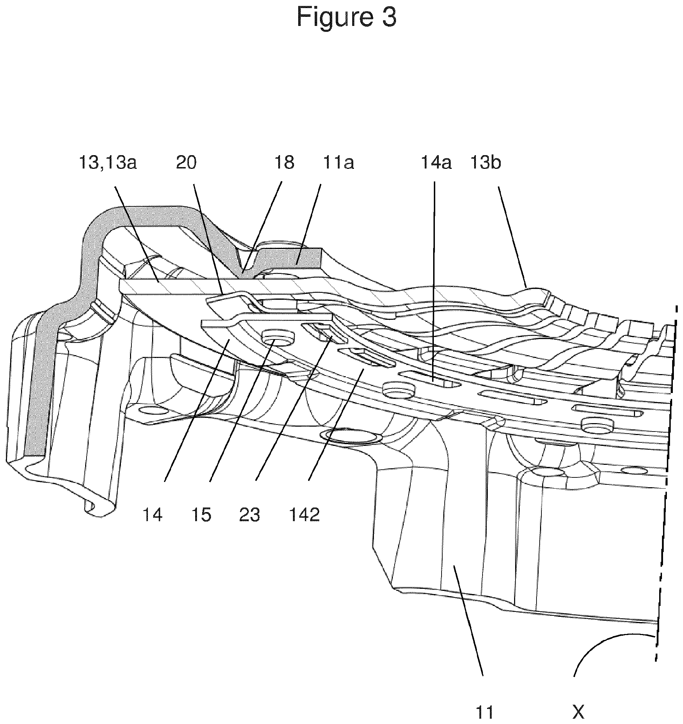

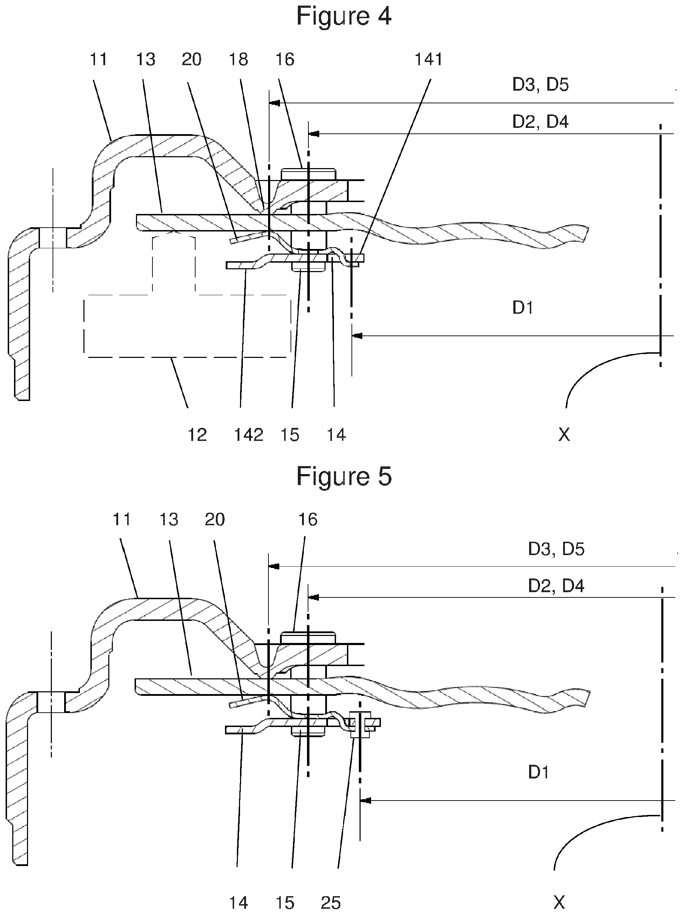

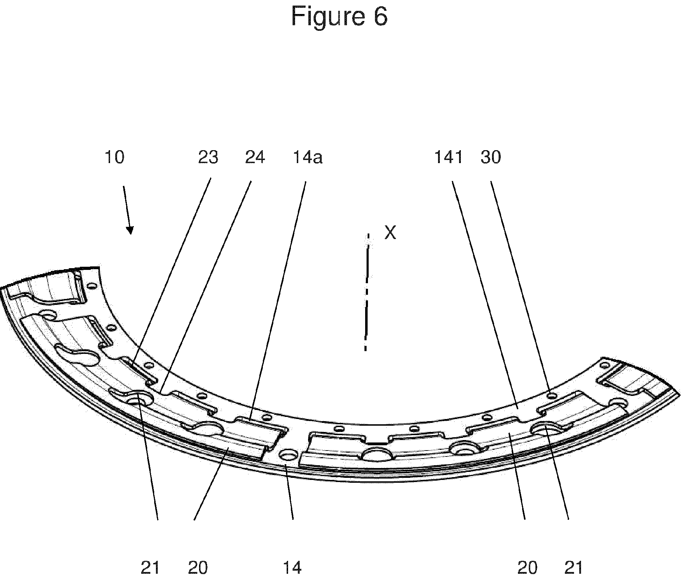

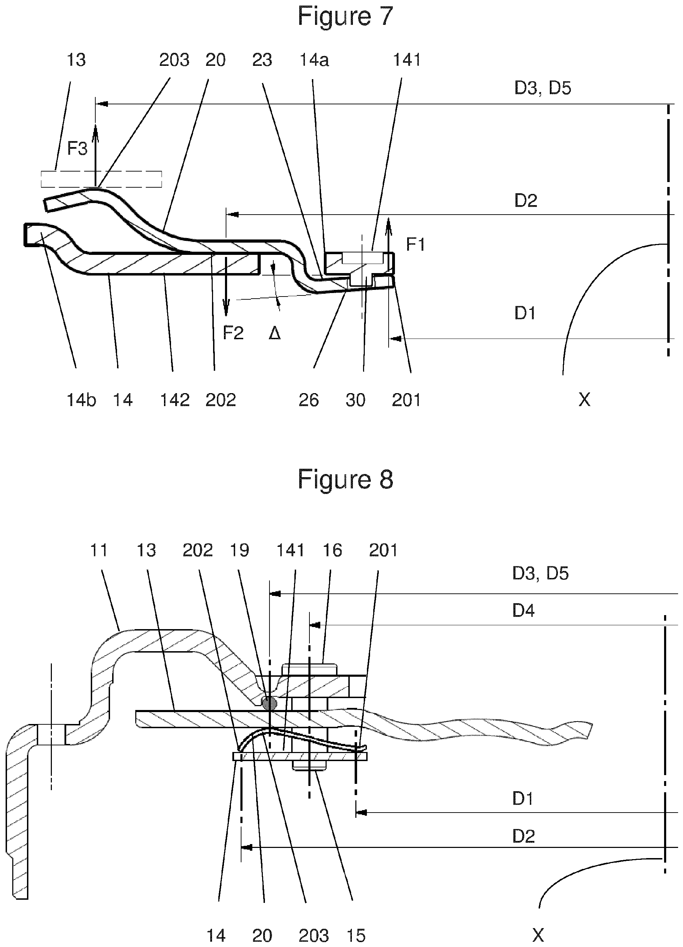

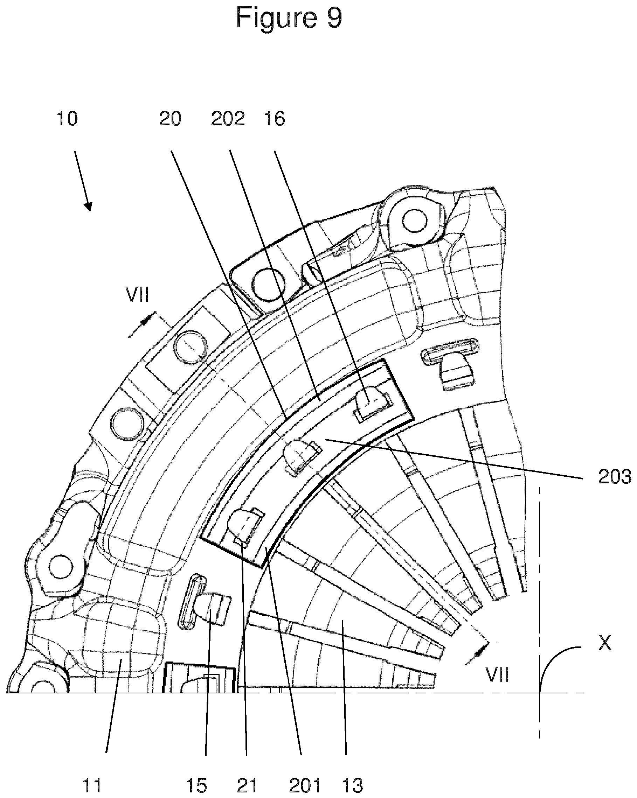

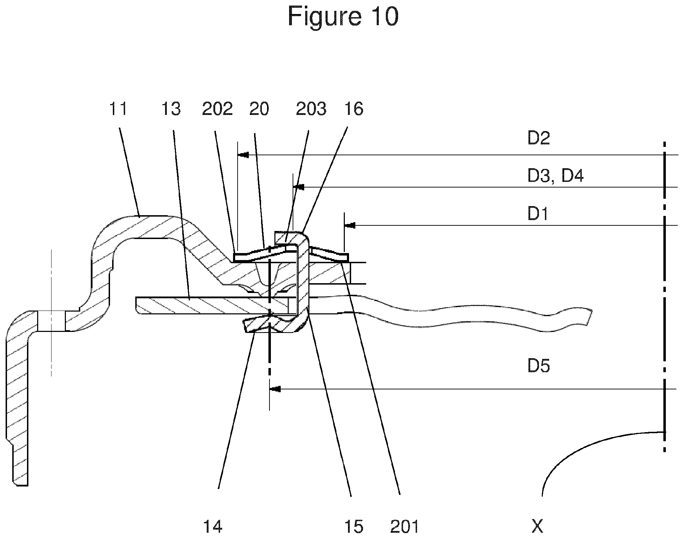

L'invention sera mieux comprise à la lecture de la description qui va suivre, donnée uniquement à titre d'exemple et faite en se référant aux dessins annexés dans lesquels :
- la figure [Fig. 1] est une vue en coupe axiale d'un sous-ensemble de transmission pour véhicule motorisé intégrant un mécanisme d'embrayage selon un premier mode de mise en œuvre de l'invention;
- la figure [Fig. 2] est une vue isométrique des segments élastiques du mécanisme d'embrayage selon le premier mode de mise en œuvre de l'invention de la figure 1 ;
- la figure [Fig. 3] est une autre vue isométrique partielle du mécanisme d'embrayage selon le premier mode de mise en œuvre de l'invention de la figure 1 ;
- la figure [Fig. 4] est une vue en coupe axiale du mécanisme d'embrayage selon le premier mode de mise en œuvre de l'invention de la figure 1 ;
- la figure [Fig. 5] est une vue en coupe axiale d'un mécanisme d'embrayage selon un deuxième mode de mise en œuvre de l'invention ;
- la figure [Fig. 6] est une vue de face d'un mécanisme d'embrayage selon un troisième mode de mise en œuvre de l'invention ;
- la figure [Fig. 7] est une vue en coupe axiale du mécanisme d'embrayage selon le troisième mode de mise en œuvre de l'invention de la figure 6 ;
- la figure [Fig. 8] est une vue en coupe axiale d'un mécanisme d'embrayage selon un quatrième mode de mise en œuvre de l'invention ;
- la figure [Fig. 9] est une vue de face d'un mécanisme d'embrayage selon un cinquième mode de mise en œuvre de l'invention ;
- la figure [Fig. 10] est une vue en coupe axiale du mécanisme d'embrayage selon le cinquième mode de mise en œuvre de l'invention de la figure 9.

Dans la suite de la description et des revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule motorisé et les termes « intérieur / interne » ou « extérieur / externe » par rapport à l'axe X et suivant une orientation radiale, orthogonale à ladite orientation axiale.

Les figures 1 à 4 illustrent une transmission de véhicule motorisé de type véhicule industriel intégrant le mécanisme d'embrayage 10 selon un premier mode de mise en œuvre de l'invention.

Le véhicule industriel comprend notamment un moteur thermique, une boite de vitesses et un sous-ensemble 1 de transmission intercalé entre le moteur thermique et la boite de vitesses. Le sous-ensemble 1 de transmission est lié cinématiquement à l'arbre mené A1 de la boite de vitesses.

Le sous-ensemble 1 de transmission comprend :
- un volant d'inertie 2 lié en rotation avec l'arbre de sortie du moteur thermique,
- un mécanisme d'embrayage 10 fixé sur le volant d'inertie, et
- un disque d'embrayage 3 intercalé axialement entre le volant d'inertie et un plateau de pression 12 du mécanisme d'embrayage.

Le disque d'embrayage 3 comprend un voile de transmission de couple 4 de forme annulaire autour d'un axe de rotation X, des éléments de guidage 5 et des ressorts hélicoïdaux de compression 6. Les deux éléments de guidage 5, autrement appelés rondelles de guidage, sont disposées de part et d'autre du voile de transmission de couple 4 en emprisonnant dans des logements intercalaires les ressorts hélicoïdaux de compression 6. Cette architecture de disque d'embrayage 3 est dites « symétrique » car le couple moteur entre d'abord par les garnitures de friction fixées sur le voile de transmission de couple 4, puis le couple moteur est transmis à l'arbre mené A1 par l'intermédiaire d'un moyeu 7 solidaire en rotation des deux éléments de guidage 5.

Comme illustré sur la figure 1, le mécanisme d'embrayage 10 comporte un couvercle 11 relié par des moyens de fixation appropriés au volant d'inertie 2. Entre le couvercle 11 et le volant d'inertie 2 sont disposés un ressort à diaphragme 13, le plateau de pression 12 et le disque d'embrayage 3. De manière optionnelle, un dispositif de compensation d'usure des garnitures de friction du disque d'embrayage peut être disposé entre le ressort à diaphragme et le plateau de pression. Le ressort à diaphragme 13 est disposé axialement entre le couvercle 11 et le plateau de pression 12. Ce ressort à diaphragme 13 comporte d'une part une partie périphérique 13a et d'autre part des doigts 13b qui s'étendent radialement vers l'intérieur du diaphragme 13 à partir de la partie périphérique 13a.

Le ressort à diaphragme 13 est monté de manière à pouvoir basculer par rapport au couvercle 11 autour de moyens d'articulation, réalisés ici en partie sous forme d'emboutis 18 formés directement dans le couvercle. Lors d'une phase de débrayage, le ressort à diaphragme 13 est actionné par une butée d'embrayage 8. La butée d'embrayage 8 exerce une force de poussée axiale F (voir figure 1) sur les extrémités libres des doigts 13b du ressort à diaphragme 13. Ce faisant, la partie périphérique 13a du ressort à diaphragme 13 prend appui sur les moyens d'articulation et l'on obtient de cette manière un effet de levier par lequel le bord extérieur du diaphragme se rapproche du couvercle 11. Le plateau de pression 12 s'écarte alors des garnitures de friction, la transmission du couple est interrompue de sorte que l'on puisse changer de rapport de vitesses.

Avec un mécanisme d'embrayage classique, l'usure des moyens d'articulation tels que les emboutis du couvercle et les zones de contact du ressort à diaphragme se traduirait par l'apparition d'un jeu de fonctionnement entre le couvercle et le ressort diaphragme.

L'objet principal de l'invention est donc de fournir un mécanisme d'embrayage 10 perfectionné capable de compenser l'usure de l'articulation du ressort à diaphragme de manière à réaliser un débrayage complet du mécanisme d'embrayage pendant toute la durée de vie du véhicule motorisé.

Nous allons maintenant décrire plus en détail l'agencement du mécanisme d'embrayage 10, selon un des modes préférés de mise en œuvre de l'invention, en référence aux figures 1 à 4.

Au sein du mécanisme d'embrayage 10, le ressort à diaphragme 13 est maintenu en précontrainte axiale à l'encontre du couvercle 11 par l'intermédiaire d'une rondelle de support 14 dotée d'excroissances axiales 15 traversant le ressort à diaphragme et le couvercle et d'une pluralité de segments élastiques 20, répartis angulairement autour de l'axe de rotation X du mécanisme d'embrayage, disposés entre deux composants adjacents du mécanisme d'embrayage, à savoir la rondelle de support 14 et le ressort à diaphragme 13. La rondelle de support 14 est donc en appui indirect sur le ressort à diaphragme notamment par l'intermédiaire des segments élastiques intercalés axialement entre les deux composants adjacents, lesquels segments élastiques 20 exercent la précontrainte axiale sur le ressort à diaphragme.

Chaque segment élastique 20 s'étend angulairement autour de l'axe X selon un angle compris entre 25° et 170° et le nombre de segments élastiques peut être compris entre 2 et 12, les segments élastiques étant régulièrement répartis angulairement autour de l'axe X. Comme illustré sur la figure 2, le mécanisme d'embrayage comprend à titre d'exemple six segments élastiques 20 qui s'étendent chacun angulairement autour de l'axe X selon un angle d'environ 55°.

Afin d'améliorer ces propriétés élastiques, le segment élastique 20 est réalisé de préférence en acier en chrome-vanadium (par exemple en acier de type 50CV4) ou en acier à haute teneur en carbone avec une teneur en carbone comprise entre 0,55% et 0,95%.

Egalement, chaque segment élastique 20 exerce une première force d'action selon un premier diamètre d'application de force D1 et une deuxième force d'action selon un deuxième diamètre d'application de force D2 sur un des composants adjacents du mécanisme d'embrayage, dans cet exemple la rondelle de support 14, ainsi qu'une force de réaction selon un troisième diamètre d'application de force D3 sur l'autre composant adjacent du mécanisme d'embrayage, dans cet exemple le ressort à diaphragme 13. Comme illustré sur la figure 4, les premier, deuxième et troisième diamètres d'application de force D1, D2 et D3 sont concentriques et espacés radialement. Le décalage des diamètres d'application de force a pour effet de réduire la raideur des segments élastiques. On entend par force d'action et force de réaction, les forces de précontrainte que chaque segment élastique exerce sur les composants adjacents lorsque le mécanisme d'embrayage est assemblé. Ces forces sont mesurables en Newton. Par exemple, les forces d'action F1, F2 et la force de réaction F3 sont d'orientation axiale.

Dans cet exemple, chaque segment élastique 20, disposé entre la rondelle de support et le ressort à diaphragme, comprend un diamètre d'appui D5 sur le ressort à diaphragme 13 confondu avec le troisième diamètre d'application de force D3. Le troisième diamètre d'application de force D3 de la force de réaction est disposé radialement au-delà des premier et deuxième diamètres d'application de force D1, D2. Le décalage du troisième diamètre d'application de force de la force de réaction a pour effet réduire la raideur des segments élastiques et d'augmenter la capacité de compensation de l'usure de l'articulation du ressort à diaphragme. Afin de maintenir le ressort à diaphragme en précontrainte axiale contre le couvercle 11, la force de réaction selon le troisième diamètre d'application de force D3 doit être supérieure à la force de poussée axiale F exercée par la butée d'embrayage 8.

Sur la figure 3, le mécanisme d'embrayage 10 est représenté dans un état sensiblement neuf. Le fonctionnement de ce mécanisme d'embrayage 10 selon l'invention, notamment durant les phases de débrayage et d'embrayage, est semblable au fonctionnement d'un mécanisme d'embrayage classique à ceci près qu'ici, chaque segment élastique 20 se déforme de manière élastique au cours de ces différentes phases de manière que les segments élastiques 20 soient toujours en contact à la fois avec le ressort à diaphragme 13 et avec la rondelle de support 14. Ainsi, avantageusement, on assure le contact permanent des moyens d'articulation avec le ressort à diaphragme 13 et le couvercle 11.

Dans cet exemple, la première force d'action selon un premier diamètre d'application de force D1 et la deuxième force d'action selon un deuxième diamètre d'application de force D2 sont orientées axialement dans des directions opposées. Egalement, la deuxième force d'action est orientée axialement dans une direction opposée à la force de réaction.

La rondelle de support 14 est réalisée sous la forme d'un composant annulaire rigide fixée au couvercle 11 par l'intermédiaire des excroissances axiale 15, chaque excroissance axiale 15 disposant d'une butée axiale 16 apte à transmettre l'effort de précontrainte axiale au couvercle. Plus précisément, les excroissances axiales 15 sont des entretoises serties sur la rondelle de support. La butée axiale 16 correspond à une tête élargie d'entretoise reposant sur une face supérieure d'appui du couvercle. Le deuxième diamètre d'application de force D2 de la deuxième force d'action est ici sensiblement confondu avec le diamètre d'implantation D4 des entretoises serties sur la rondelle de support 14.

Chaque segment élastique 20 comprend des trous de passage 21 pour les excroissances axiales 15, les trous de passage 21 étant disposés radialement au-delà du premier diamètre d'application de force D1 de la première force d'action.

Enfin, chaque segment élastique 20 comprend des pattes 23 issues d'un bord circonférentiel interne 24 et la rondelle de support 14 comprend des orifices 14a répartis angulairement autour de l'axe X, les pattes 23 des segments élastiques étant insérées dans les orifices 14a. Les pattes 23 sont orientées angulairement en face des trous de passage 21 aménagés pour laisser passer les excroissances axiales 15.

Comme illustré sur la figure 4, la rondelle de support 14 comprend une face supérieure d'appui 141 orientée en direction du ressort à diaphragme 13 et une face inférieure d'appui 142 axialement opposée à la face supérieure d'appui 141, chaque segment élastique 20 appuyant simultanément sur la face inférieure d'appui 142 selon la première force d'action et sur la face supérieure d'appui 141 selon la deuxième force d'action. Dans cet exemple, les pattes 23 de chaque segment élastique appuient sur la face inférieure d'appui 142 de la rondelle de support 14.

On va maintenant décrire en référence à la figure 5, un mécanisme d'embrayage 10 selon un deuxième mode de mise en œuvre de l'invention sensiblement similaire au précèdent. Ce deuxième mode de mise en œuvre de l'invention se distingue par le fait que chaque segment élastique 20 est fixé solidement sur la rondelle de support 14 à l'aide d'au moins un point de fixation 25, par exemple par rivetage, soudage ou vissage.

Dans cet exemple, chaque segment élastique 20 comprend des pattes 23 issues d'un bord circonférentiel interne 24 et la rondelle de support 14 comprend des orifices 14a répartis angulairement autour de l'axe X, les pattes 23 des segments élastiques étant insérées dans les orifices 14a. Les points de fixation 25 sont disposés sur les pattes 23.

Les points de fixation 25 des segments élastiques 20 sont répartis angulairement selon le premier diamètre d'application de force D1. Les points de fixation 25 sont des rivets. En variante, les points de fixation peuvent être des points de soudure.

On va maintenant décrire en référence aux figures 6 et 7, un mécanisme d'embrayage 10 selon un troisième mode de mise en œuvre de l'invention sensiblement similaire au premier mode de mise en œuvre. Ce troisième mode de mise en œuvre de l'invention se distingue par le fait que la rondelle de support 14 comprend des plots de centrage 30 associés à chaque segment élastique 20.

Chacun des plots de centrage 30 est inséré dans un trou 26 aménagé dans le segment élastique 20 associé afin de maintenir en position les segments élastiques. Par exemple, les plots de centrage 30 sont extrudés depuis la partie annulaire de la rondelle de support 14.

Dans cet exemple, chaque segment élastique 20 comprend des pattes 23 issues d'un bord circonférentiel interne 24 et la rondelle de support 14 comprend des orifices 14a répartis angulairement autour de l'axe X, les pattes 23 des segments élastiques étant insérées dans les orifices 14a. Les pattes 23 sont décalées angulairement par rapport aux trous de passage 21 aménagés pour laisser passer les excroissances axiales 15.

Chaque segment élastique 20, disposé entre la rondelle de support et le ressort à diaphragme, comprend un diamètre d'appui D5 sur le ressort à diaphragme 13 confondu avec le troisième diamètre d'application de force D3. Le troisième diamètre d'application de force D3 de la force de réaction F3 est disposé radialement au-delà des premier et deuxième diamètres d'application de force D1, D2 des première et deuxième forces d'action F1, F2. Le premier diamètre d'application de force D1 de la première force d'action F1 est décalé radialement en direction de l'axe X afin de réduire la raideur des segments élastiques et d'augmenter la capacité de compensation de l'usure de l'articulation du ressort à diaphragme. Pour cela, chaque segment élastique 20 appui sur une périphérie interne de la rondelle de support 14 par l'intermédiaire de chaque patte 23 qui est formée avec un angle Δ par rapport à la face inférieure d'appui 142 de la rondelle de support.

Chaque segment élastique 20 comprend une première surface d'application 201 de la première force d'action F1, une deuxième surface d'application 202 de la deuxième force d'action F2, une troisième surface d'application 203 de la force de réaction F3, la troisième surface d'application 203 étant décalée axialement par rapport aux première et deuxième surfaces d'application 201, 202.

Le deuxième diamètre d'application de force D2 de la deuxième force d'action F2 est sensiblement confondu avec le diamètre d'implantation des entretoises 15 serties sur la rondelle de support. Selon l'invention, les termes « sensiblement confondu » veulent dire que les diamètres sont égaux ou de dimensions proches.

Dans cet exemple, la première force d'action F1 selon le premier diamètre d'application de force D1 et la deuxième force d'action F2 selon le deuxième diamètre d'application de force D2 sont orientées axialement dans des directions opposées. Egalement, la deuxième force d'action F2 est orientée axialement dans une direction opposée à la force de réaction F3.

A partir de la figure 7, on comprend que pour maintenir le ressort à diaphragme 13 en précontrainte axiale contre le couvercle 11, la force de réaction F3 selon le troisième diamètre d'application de force D3 doit être supérieure à la force de poussée axiale F exercée par la butée d'embrayage 8. Chaque segment élastique 20 est déformé de manière élastique afin d'assurer le contact permanent des moyens d'articulation avec le ressort à diaphragme 13 et le couvercle 11. Pour prévenir une trop grande déformation des segments élastiques 20, la rondelle de support 14 comprend sur sa périphérie externe un rebord 14b annulaire d'appui qui limite la déformation axiale desdits segments élastiques. Dans la position embrayée du mécanisme d'embrayage 10, un espace axial existe entre ce rebord 14b et l'extrémité radiale externe de chaque segment élastique. Au-delà d'un certain effort, l'extrémité radiale externe peut venir en appui sur le rebord 14b annulaire d'appui et éviter ainsi la fissuration ou la rupture des segments élastiques.

On va maintenant décrire en référence à la figure 8, un mécanisme d'embrayage 10 selon un quatrième mode de mise en œuvre de l'invention dans lequel le troisième diamètre d'application de force D3 de la force de réaction est disposé radialement entre les premier et deuxième diamètres d'application de force D1, D2. Le décalage du troisième diamètre d'application de force de la force de réaction a pour effet de réduire la raideur des segments élastiques et d'augmenter la capacité de compensation de l'usure de l'articulation du ressort à diaphragme.

Dans cet exemple, chaque segment élastique 20, disposé entre la rondelle de support 14 et le ressort à diaphragme 13, comprend un diamètre d'appui D5 sur le ressort à diaphragme 13 confondu avec le troisième diamètre d'application de force D3. Avantageusement, la première force d'action selon un premier diamètre d'application de force D1 et la deuxième force d'action selon un deuxième diamètre d'application de force D2 sont orientées axialement dans la même direction. Ainsi, la rondelle de support 14 comprend une face supérieure d'appui 141 orientée en direction du ressort à diaphragme 13, chaque segment élastique 20 appuyant simultanément sur la face supérieure d'appui 141 avec les première et deuxième forces d'action.

Chaque segment élastique 20 comprend une première surface d'application 201 de la première force d'action, une deuxième surface d'application 202 de la deuxième force d'action, une troisième surface d'application 203 de la force de réaction, la troisième surface d'application 203 étant décalée axialement par rapport aux première et deuxième surfaces d'application 201, 202. La première surface d'application 201 est disposée sur le premier diamètre d'application de force D1, la deuxième surface d'application 202 est disposée sur le deuxième diamètre d'application de force D2 et la troisième surface d'application 203 est disposée sur le troisième diamètre d'application de force D3. Le décalage axial des surfaces d'application de force d'action et de réaction a pour effet de réduire la raideur des segments élastiques.

Dans ce quatrième mode de mise en œuvre de l'invention, chaque segment élastique 20 comprend des trous de passage 21 pour les excroissances axiales 15, les trous de passage 21 étant disposés radialement au-delà du premier diamètre d'application de force D1 de la première force d'action. Plus précisément, les excroissances axiales 15 sont des entretoises serties sur la rondelle de support. La butée axiale 16 correspond à une tête élargie d'entretoise reposant sur une face supérieure d'appui du couvercle. Les trous de passage 21 pour les entretoises serties 15 sont disposés radialement entre le premier diamètre d'application de force D1 et le deuxième diamètre d'application de force D2.

Dans ce mode de mise en œuvre, le ressort à diaphragme 13 est monté de manière à pouvoir basculer par rapport au couvercle 11 autour de moyens d'articulation, réalisés ici en partie sous la forme d'un anneau 19 rapporté sur le couvercle. L'anneau 19 rapporté est par exemple un anneau ouvert ou fermé.

L'invention n'est pas limitée aux exemples de mise en œuvre de l'invention qui viennent d'être décrit. Les figures 9 et 10 illustrent un cinquième mode de mise en œuvre de l'invention dans lequel les segments élastiques 20 sont disposés entre l'extrémité des excroissances axiales 15 et le couvercle 11. Autrement dit, les segments élastiques 20 sont disposés à l'extérieur du couvercle contrairement aux modes de mise en œuvre précédemment décrit.

Au sein de ce mécanisme d'embrayage 10, le ressort à diaphragme 13 est maintenu en précontrainte axiale à l'encontre du couvercle 11 par l'intermédiaire d'une rondelle de support 14 dotée d'excroissances axiales 15 traversant le ressort à diaphragme et le couvercle, chaque excroissance axiale 15 disposant d'une butée axiale 16 apte à transmettre l'effort de précontrainte axiale au couvercle, et d'une pluralité de segments élastiques 20, répartis angulairement autour de l'axe de rotation X du mécanisme d'embrayage, disposés entre deux composants adjacents du mécanisme d'embrayage, à savoir la butée axiale 16 des excroissances axiales 15 et le couvercle 11. La rondelle de support 14 est donc en appui direct sur le ressort à diaphragme 13 selon un diamètre d'appui D5.

Comme illustré sur la figure 9, le mécanisme d'embrayage 10 comprend à titre d'exemple six segments élastiques 20 qui s'étendent chacun angulairement autour de l'axe X selon un angle d'environ 40°.

Chaque segment élastique 20 exerce une première force d'action selon un premier diamètre d'application de force D1 et une deuxième force d'action selon un deuxième diamètre d'application de force D2 sur un des composants adjacents du mécanisme d'embrayage, dans cet exemple la rondelle de support 14, ainsi qu'une force de réaction selon un troisième diamètre d'application de force D3 sur l'autre composant adjacent du mécanisme d'embrayage, dans cet exemple le ressort à diaphragme 13. Comme illustré sur la figure 10, les premier, deuxième et troisième diamètres d'application de force D1, D2 et D3 sont concentriques et espacés radialement. Le décalage des diamètres d'application de force a pour effet de réduire la raideur des segments élastiques.

Dans cet exemple, chaque segment élastique 20 comprend une première surface d'application 201 de la première force d'action, une deuxième surface d'application 202 de la deuxième force d'action, une troisième surface d'application 203 de la force de réaction, la troisième surface d'application 203 étant décalée axialement par rapport aux première et deuxième surfaces d'application 201, 202. La première surface d'application 201 est disposée sur le premier diamètre d'application de force D1, la deuxième surface d'application 202 est disposée sur le deuxième diamètre d'application de force D2 et la troisième surface d'application 203 est disposée sur le troisième diamètre d'application de force D3. Le décalage axial des surfaces d'application de force d'action et de réaction a pour effet de réduire la raideur des segments élastiques.

La rondelle de support 14 est réalisée sous la forme d'un composant annulaire rigide. La rondelle de support 14 est fixée au couvercle 11 par l'intermédiaire des excroissances axiales 15, chaque excroissance axiale 15 disposant d'une butée axiale 16 apte à transmettre l'effort de précontrainte axiale au couvercle. Dans cet exemple, les excroissances axiales 15 sont issues de matière avec la rondelle de support. Plus précisément, les excroissances axiales 15 sont des pattes pliées issues de la périphérie interne de la rondelle de support 14. L'extrémité pliée de la patte 15 constitue la butée axiale 16. Ainsi, chaque segment élastique 20 comprend un diamètre d'appui D4 sur les butées axiales 16 confondu avec le troisième diamètre d'application de force D3.

Les segments élastiques 20 comprennent des trous de passage 21 pour les excroissances axiales 15, les trous de passage 21 étant disposés radialement au-delà du premier diamètre d'application de force D1 de la première force d'action. Les trous de passage 21 pour les pattes 15 sont disposés radialement entre le premier diamètre d'application de force D1 et le deuxième diamètre d'application de force D2.

Dans ce cinquième mode de mise en œuvre de l'invention, le couvercle 11 comprend une face supérieure d'appui orientée axialement vers l'extérieur du mécanisme d'embrayage, chaque segment élastique 20 appuyant simultanément sur la face supérieure d'appui avec les première et deuxième forces d'action. Afin de maintenir le ressort à diaphragme 13 en précontrainte axiale contre le couvercle 11, la force de réaction selon le troisième diamètre d'application de force D3 doit être supérieure à la force de poussée axiale F exercée par la butée d'embrayage 8.

Selon un autre mode de mise en œuvre de l'invention dans lequel le ressort à diaphragme 13 est maintenu en précontrainte axiale à l'encontre du couvercle 11 par l'intermédiaire d'une rondelle de support 14 et dans lequel une pluralité de segments élastiques 20 est disposé entre deux composants adjacents du mécanisme d'embrayage, à savoir la butée axiale 16 des excroissances axiales 15 et le couvercle 11, le troisième diamètre d'application de force D3 de la force de réaction peut être disposé radialement à l'intérieur des premier et deuxième diamètres d'application de force D1, D2.

Dans cet autre mode de mise en œuvre, chaque segment élastique peut être fixé solidement sur le couvercle à l'aide d'au moins un point de fixation, par exemple par rivetage, soudage ou vissage. Egalement, le couvercle peut comprendre des plots de centrage associés à chaque segment élastique, les plots de centrage étant extrudés depuis le fond du couvercle.

L'invention n'est pas limitée à son utilisation dans une transmission de véhicule industriel comme décrite précédemment. Le mécanisme d'embrayage 10 peut également être intégré à une transmission de véhicule motorisé dites « hybride » comprenant une machine électrique tournante pouvant être accouplée à la transmission de puissance issu du moteur thermique.

## Revendications

1. Mécanisme d'embrayage (10), pour véhicule motorisé, comprenant un couvercle (11), un plateau de pression (12) solidaire en rotation du couvercle et mobile axialement par rapport à celui-ci, un ressort à diaphragme (13) en appui sur le couvercle et le plateau de pression,
le ressort à diaphragme étant maintenu en précontrainte axiale à l'encontre du couvercle par l'intermédiaire d'une rondelle de support (14) dotée d'excroissances axiales (15) traversant le ressort à diaphragme et le couvercle, chaque excroissance axiale (15) disposant d'une butée axiale (16) apte à transmettre l'effort de précontrainte axiale au couvercle, et d'une pluralité de segments élastiques (20), répartis angulairement autour de l'axe de rotation (X) du mécanisme d'embrayage, disposés entre deux composants adjacents du mécanisme d'embrayage (10), à savoir entre la butée axiale (16) des excroissances axiales (15) et
le couvercle (11) ou entre la rondelle de support (14) et le ressort à diaphragme (13), lesquels segments élastiques (20) exercent la précontrainte axiale sur le ressort à diaphragme,
**caractérisé en ce que** chaque segment élastique (20) exerce une première force d'action selon un premier diamètre d'application de force (D1) et une deuxième force d'action selon un deuxième diamètre d'application de force (D2) sur un des composants adjacents du mécanisme d'embrayage, ainsi qu'une force de réaction selon un troisième diamètre d'application de force (D3) sur l'autre composant adjacent du mécanisme d'embrayage, les premier, deuxième et troisième diamètres d'application de force (D1, D2, D3) étant concentriques et espacés radialement.

2. Mécanisme d'embrayage (10) selon la revendication 1, **caractérisé en ce qu'**au moins une des première et deuxième forces d'action est orientée axialement dans une direction opposée à la force de réaction.

3. Mécanisme d'embrayage (10) selon l'une des
revendications précédentes, **caractérisé en ce que** chaque segment élastique (20) comprend une première surface d'application (201) de la première force d'action, une deuxième surface d'application (202) de la deuxième force d'action, une troisième surface d'application (203) de la force de réaction, la troisième surface d'application (203) étant décalée axialement par rapport aux première et deuxième surfaces d'application (201, 202).

4. Mécanisme d'embrayage (10) selon l'une des
revendications précédentes, **caractérisé en ce que** le diamètre d'application de force (D1, D2, D3) d'au moins une des première et deuxième forces d'action ou de la force de réaction est décalé radialement par rapport au diamètre d'implantation (D4) des excroissances axiales (15).

5. Mécanisme d'embrayage (10) selon l'une des
revendications précédentes, **caractérisé en ce que** chaque segment élastique (20) comprend des trous de passage (21) pour les excroissances axiales (15), les trous de passage (21) étant disposés radialement au-delà du premier diamètre d'application de force (D1) de la première force d'action.

6. Mécanisme d'embrayage (10) selon l'une des
revendications 1 à 5, **caractérisé en ce que** le troisième diamètre d'application de force (D3) de la force de réaction est disposé radialement au-delà des premier et deuxième diamètres d'application de force (D1, D2).

7. Mécanisme d'embrayage (10) selon la revendication
précédente, **caractérisé en ce que** la première force d'action selon un premier diamètre d'application de force (D1) et la deuxième force d'action selon un deuxième diamètre d'application de force (D2) sont orientées axialement dans des directions opposées.

8. Mécanisme d'embrayage (10) selon l'une des
revendications 6 ou 7, **caractérisé en ce que** chaque segment élastique (20), disposé entre la rondelle de support (14) et le ressort à diaphragme (13), comprend un diamètre d'appui (D5) sur le ressort à diaphragme confondu avec le troisième diamètre d'application de force (D3).

9. Mécanisme d'embrayage (10) selon l'une des
revendications 6 à 8, **caractérisé en ce que** chaque segment élastique (20) comprend des pattes (23) issues d'un bord circonférentiel interne (24) et la rondelle de support (14) comprends des orifices (14a) répartis angulairement autour de l'axe (X), les pattes (23) des segments élastiques étant insérées dans les orifices (14a).

10. Mécanisme d'embrayage (10) selon la revendication
précédente, **caractérisé en ce que** la rondelle de support (14) comprend une face supérieure d'appui (141) orientée en direction du ressort à diaphragme et une face inférieure d'appui (142) axialement opposée à la face supérieure d'appui, chaque segment élastique (20) appuyant simultanément sur la face inférieure d'appui (142) selon la première force d'action et sur la face supérieure d'appui (141) selon la deuxième force d'action.

11. Mécanisme d'embrayage (10) selon la revendication
précédente, **caractérisé en ce que** chaque segment élastique (20) appui sur une périphérie interne de la rondelle de support (14) par l'intermédiaire de chaque patte (23) qui est formée avec un angle (Δ) par rapport à la face d'appui inférieure d'appui (142) de la rondelle de support.

12. Mécanisme d'embrayage (10) selon l'une des
revendications 6 à 10, **caractérisé en ce que** chaque segment élastique (20) est fixé solidement sur la rondelle de support (14) à l'aide d'au moins un point de fixation (25), par exemple par rivetage, soudage ou vissage.

13. Mécanisme d'embrayage (10) selon l'une des
revendications 1 à 5, **caractérisé en ce que** le troisième diamètre d'application de force (D3) de la force de réaction est disposé radialement entre les premier et deuxième diamètres d'application de force (D1, D2).

14. Mécanisme d'embrayage (10) selon la revendication
précédente, **caractérisé en ce que** la première force d'action selon un premier diamètre d'application de force (D1) et la deuxième force d'action selon un deuxième diamètre d'application de force (D2) sont orientées axialement dans la même direction.

15. Mécanisme d'embrayage (10) selon la revendication 13 ou 14, **caractérisé en ce que** les trous de passage (21) pour les excroissances axiales (15) sont disposés radialement entre le premier diamètre d'application de force (D1) et le deuxième diamètre d'application de force (D2).

## Patentansprüche

1. Kupplungsmechanismus (10) für Kraftfahrzeuge, bestehend aus einem Deckel (11), einer drehfest mit dem Deckel verbundenen und gegenüber diesem axial verschiebbaren Druckplatte (12), einer auf dem Deckel und der Druckplatte aufliegenden Membranfeder (13),
wobei die Membranfeder durch eine Stützscheibe (14) mit axialen Vorsprüngen (15), die die Membranfeder und den Deckel durchdringen, in axialer Vorspannung gegen den Deckel gehalten wird, wobei jeder axiale Vorsprung (15) über einen axialen Anschlag (16) verfügt, der die axiale Vorspannkraft auf den Deckel übertragen kann, und über eine Vielzahl von elastischen Segmenten (20), die winklig um die Drehachse (X) des Kupplungsmechanismus verteilt sind und zwischen zwei benachbarten Bauteilen des Kupplungsmechanismus (10) angeordnet sind, nämlich zwischen dem axialen Anschlag (16) der axialen Vorsprünge (15) und dem Deckel (11) oder zwischen der Stützscheibe (14) und der Membranfeder (13) angeordnet sind, wobei die elastischen Segmente (20) die axiale Vorspannung auf die Membranfeder ausüben,
**dadurch gekennzeichnet, dass** jedes elastische Segment (20) eine erste Kraftwirkung gemäß einem ersten Kraftangriffsdurchmesser (D1) und eine zweite Kraftwirkung gemäß einem zweiten Kraftangriffsdurchmesser (D2) auf eines der benachbarten Bauteile des Kupplungsmechanismus sowie eine Reaktionskraft gemäß einem dritten Kraftangriffsdurchmesser (D3) auf das andere benachbarte Bauteil des Kupplungsmechanismus ausübt, wobei der erste, zweite und dritte Kraftangriffsdurchmesser (D1, D2, D3) konzentrisch und radial beabstandet sind.

2. Kupplungsmechanismus (10) nach Anspruch 1, **dadurch gekennzeichnet, dass** mindestens eine der ersten und zweiten Kraft axial in einer Richtung entgegengesetzt zur Reaktionskraft ausgerichtet ist.

3. Kupplungsmechanismus (10) gemäß einem der vorstehenden Ansprüche, **dadurch gekennzeichnet, dass** jedes elastische Segment (20) eine erste Angriffsfläche (201) für die erste Wirkungs-kraft, eine zweite Angriffsfläche (202) für die zweite Wirkungs-kraft, eine dritte Angriffsfläche (203) für die Reaktionskraft und wobei die dritte Angriffsfläche (203) axial gegenüber der ersten und zweiten Angriffsfläche (201, 202) versetzt ist.

4. Der Kupplungsmechanismus (10) gemäß einem der vorstehenden Ansprüche, **dadurch gekennzeichnet, dass** der Kraftangriffsdurchmesser (D1, D2, D3) für mindestens eine der ersten und zweiten Aktionskräfte oder die Reaktionskraft radial versetzt zu dem Implantationsdurchmesser (D4) ist, bei dem die axialen Vorsprünge (15) implantiert sind.

5. Kupplungsmechanismus (10) nach einem der vorstehenden Ansprüche, **dadurch gekennzeichnet, dass** jedes elastische Segment (20) Durchgangslöcher (21) für die axialen Vorsprünge (15) aufweist, wobei wobei die Durchgangslöcher (21) radial jenseits des ersten Kraftangriffsdurchmessers (D1) der ersten Wirkkraft angeordnet sind.

6. Kupplungsmechanismus (10) nach einem der Ansprüche 1 bis 5, **dadurch gekennzeichnet, dass** der dritte Kraftangriffsdurchmesser (D3) der Reaktionskraft radial außerhalb des ersten und zweiten Kraftangriffsdurchmessers (D1, D2) angeordnet ist.

7. Kupplungsmechanismus (10) nach dem vorhergehenden Anspruch, **dadurch gekennzeichnet, dass** die erste Kraftwirkung gemäß einem ersten Kraftwirkungsdurchmesser (D1) und die zweite Kraftwirkung gemäß einem zweiten Kraftwirkungsdurchmesser (D2) axial in entgegengesetzte Richtungen ausgerichtet sind.

8. Kupplungsmechanismus (10) gemäß einem der Ansprüche 6 oder 7, **dadurch gekennzeichnet, dass** jedes elastische Segment (20), das zwischen der Stützscheibe (14) und der Membranfeder (13) angeordnet ist, einen Auflagedurchmesser (D5) auf der Membranfeder aufweist, der mit dem dritten Krafteinwirkungsdurchmesser (D3) übereinstimmt.

9. Kupplungsmechanismus (10) gemäß einem der Ansprüche 6 bis 8, **dadurch gekennzeichnet, dass** jedes elastische Segment (20) Laschen (23) aufweist, die von einem inneren Umfangsrand (24) ausgehen, und dass die Stützscheibe (14) Öffnungen (14a) aufweist, die winklig um die Achse (X) verteilt sind, wobei die Laschen (23) der elastischen Segmente in die Öffnungen (14a) eingesetzt sind.

10. Kupplungsmechanismus (10) nach dem vorhergehenden Anspruch, **dadurch gekennzeichnet, dass** die Stützscheibe (14) eine zur Membranfeder gerichtete obere Auflagefläche (141) und eine der oberen Auflagefläche axial gegenüberliegende untere Auflagefläche (142) aufweist, wobei wobei jedes elastische Segment (20) gleichzeitig mit der ersten Kraft auf die untere Auflagefläche (142) und mit der zweiten Kraft auf die obere Auflagefläche (141) drückt.

11. Kupplungsmechanismus (10) gemäß dem vorherigen Anspruch, **dadurch gekennzeichnet, dass** jedes elastische Segment (20) über jede Lasche (23), die in einem Winkel (Δ) zur unteren Auflagefläche (142) der Stützscheibe ausgebildet ist, auf einen Innenumfang der Stützscheibe (14) drückt.

12. Kupplungsmechanismus (10) gemäß einem der Ansprüche 6 bis 10, **dadurch gekennzeichnet, dass** jedes elastische Segment (20) mit mindestens einem Befestigungspunkt (25), beispielsweise durch Nieten, Schweißen oder Schrauben, fest an der Stützscheibe (14) befestigt ist.

13. Kupplungsmechanismus (10) nach einem der Ansprüche 1 bis 5, **dadurch gekennzeichnet, dass** der dritte Kraftangriffsdurchmesser (D3) der Reaktionskraft radial zwischen dem ersten und dem zweiten Kraftangriffsdurchmesser (D1, D2) angeordnet ist.

14. Kupplungsmechanismus (10) nach dem vorhergehenden Anspruch, **dadurch gekennzeichnet, dass** die erste Kraftwirkung gemäß einem ersten Kraftwirkungsdurchmesser (D1) und die zweite Kraftwirkung gemäß einem zweiten Kraftwirkungsdurchmesser (D2) axial in die gleiche Richtung ausgerichtet sind.

15. Kupplungsmechanismus (10) nach Anspruch 13 oder 14, **dadurch gekennzeichnet, dass** die Durchgangslöcher (21) für die axialen Vorsprünge (15) radial zwischen dem ersten Krafteinwirkungsdurchmesser (D1) und dem zweiten Krafteinwirkungsdurchmesser (D2) angeordnet sind.

## Claims

1. A clutch mechanism (10) for a motorized vehicle, comprising a cover (11), a pressure plate (12) coupled in rotation with the cover and movable axially relative thereto, and a diaphragm spring (13) bearing against the cover and the pressure plate,
the diaphragm spring being held in axial preload against the cover by a support washer (14) provided with axial protuberances (15) passing through the diaphragm spring and the cover, each axial protuberance (15) having an axial stop (16) able to transmit the axial preload force to the cover, and a plurality of elastic segments (20), distributed angularly about the axis of rotation (X) of the clutch mechanism, these segments being arranged between two adjacent components of the clutch mechanism (10), namely between the axial stop (16) of the axial protuberances (15) and
the cover (11) or between the support washer (14) and the diaphragm spring (13), which elastic segments (20) exert the axial preload on the diaphragm spring,
**characterized in that** each elastic segment (20) exerts a first action force over a first force-application diameter (D1) and a second action force over a second force-application diameter (D2) on one of the adjacent components of the clutch mechanism, as well as a reaction force over a third force-application diameter (D3) on the other adjacent component of the clutch mechanism, the first, second and third force-application diameters (D1, D2, D3) being concentric and radially spaced.

2. The clutch mechanism (10) as claimed in claim 1, **characterized in that** at least one of the first and second action forces is oriented axially in an opposite direction to the reaction force.

3. The clutch mechanism (10) as claimed in one of the preceding claims, **characterized in that** each elastic segment (20) comprises a first application surface (201) for the first action force, a second application surface (202) for the second action force, a third application surface (203) for the reaction force, the third application surface (203) being offset axially with respect to the first and second application surfaces (201, 202).

4. The clutch mechanism (10) as claimed in one of the preceding claims, **characterized in that** the force-application diameter (D1, D2, D3) for at least one of the first and second action forces or the reaction force is offset radially with respect to the implantation diameter (D4) at which the axial protuberances (15) are implanted.

5. The clutch mechanism (10) as claimed in one of the preceding claims, **characterized in that** each elastic segment (20) comprises through-holes (21) for the axial protuberances (15), the through-holes (21) being arranged radially beyond the first force-application diameter (D1) for the first action force.

6. The clutch mechanism (10) as claimed in one of claims 1 to 5, **characterized in that** the third force-application diameter (D3) for the reaction force is arranged radially beyond the first and second force-application diameters (D1, D2).

7. The clutch mechanism (10) as claimed in the preceding claim, **characterized in that** the first action force over a first force-application diameter (D1) and the second action force over a second force-application diameter (D2) are oriented axially in opposite directions.

8. The clutch mechanism (10) as claimed in one of claims 6 or 7, **characterized in that** each elastic segment (20), arranged between the support washer (14) and the diaphragm spring (13), comprises a pressing diameter (D5) for pressing on the diaphragm spring that coincides with the third force-application diameter (D3).

9. The clutch mechanism (10) as claimed in one of claims 6 to 8, **characterized in that** each elastic segment (20) comprises tabs (23) originating from an internal circumferential edge (24), and the support washer (14) comprises orifices (14a) distributed angularly about the axis (X), the tabs (23) of the elastic segments being inserted in the orifices (14a).

10. The clutch mechanism (10) as claimed in the preceding claim, **characterized in that** the support washer (14) comprises an upper pressure face (141) oriented toward the diaphragm spring and a lower pressure face (142), axially opposite to the upper pressure face, each elastic segment (20) pressing simultaneously on the lower pressure face (142) with the first action force, and on the upper pressure face (141) with the second action force.

11. The clutch mechanism (10) as claimed in the preceding claim, **characterized in that** each elastic segment (20) presses on an internal periphery of the support washer (14) via each tab (23) which is formed at an angle (Δ) with respect to the lower pressing pressure face (142) of the support washer.

12. The clutch mechanism (10) as claimed in one of claims 6 to 10, **characterized in that** each elastic segment (20) is fixed solidly to the support washer (14) using at least one fixing point (25), for example using riveting, welding or screw fastening.

13. The clutch mechanism (10) as claimed in one of claims 1 to 5, **characterized in that** the third force-application diameter (D3) for the reaction force is arranged radially between the first and second force-application diameters (D1, D2).

14. The clutch mechanism (10) as claimed in the preceding claim, **characterized in that** the first action force over a first force-application diameter (D1) and the second action force over a second force-application diameter (D2) are oriented axially in the same direction.

15. The clutch mechanism (10) as claimed in claim 13 or 14, **characterized in that** the through-holes (21) for the axial protuberances (15) are arranged radially between the first force-application diameter (D1) and the second force-application diameter (D2).
